# EUROPÄISCHE PATENTANMELDUNG

(11) **EP 3 517 815 A1**
(43) Veröffentlichungstag der Anmeldung: **31.07.2019**
(21) Anmeldenummer: 18153209.4
(22) Anmeldetag: 24.01.2018
(51) Int. Cl.: F16L 5/04, E04B 1/20, A62C 2/06, E04B 1/94

(54) **BAUGRUPPE UMFASSEND MEHRERE BRANDSCHUTZPROFILE UND VERFAHREN ZUR HERSTELLUNG EINES BRANDSCHUTZPROFILS**

(71) Anmelder: HILTI Aktiengesellschaft, 9494 Schaan (LI)
(72) Erfinder: Förg, Christian, 86862 Lamerdingen (DE)
(74) Vertreter: Hilti Aktiengesellschaft Corporate Intellectual Property

(57) **Zusammenfassung**

Es wird eine Baugruppe (10) angegeben, umfassend mindestens zwei Brandschutzprofile (12), die einen Schlauch (18) aus einem Verbundmaterial (19) aufweisen, der mit einem Brandschutzmaterial (20) gefüllt ist, wobei das Verbundmaterial (19) ein anorganisches Fasermaterial (24) aufweist, das mit einer Folie (22) verbunden ist, wobei die Brandschutzprofile (12) derart ausgebildet sind, dass sie im Brandfall miteinander verbacken. Des Weiteren wird ein Verfahren zur Herstellung eines Brandschutzprofils angegeben.

## Beschreibung

Die vorliegende Erfindung betrifft eine Baugruppe mit mehreren Brandschutzprofilen und ein Verfahren zur Herstellung eines Brandschutzprofils.

Zur Abschottung von Wand- und Deckendurchführungen werden Brandschutzabschottungsmaterialien wie beispielsweise Brandschutzkissen und Brandschutzsteine verwendet. Dies bestehen häufig aus Polyurethan.

Diese block- oder kissenförmigen Materialien werden in einem abzudichtenden Durchbruch zu einem Schott geschichtet.

Nachteilig ist hierbei, dass meist eine große Anzahl dieser Einheiten zu einem Schott zusammengefügt werden muss und dass die Einheiten zur Anpassung an Leitungsdurchführungen zugeschnitten werden müssen. Um ein Zuschneiden zu reduzieren, wird häufig mit zusätzlichen Dichtstoffen gearbeitet, was jedoch ebenfalls aufwändig ist.

Eine geringere Dichte würde den Installationsprozess vereinfachen, ist aber in Bezug auf den Feuerwiderstand nachteilig. Üblicherweise haben die Einheiten eine Dichte von 200-400 kg/m³.

Ein weiterer Nachteil ist, dass die Einheiten in einem Einzelformherstellverfahren produziert werden, was wenig effektiv ist.

Es ist somit eine Aufgabe der vorliegenden Erfindung, einen zuverlässigen und einfach zu installierenden Brandschutz bereitzustellen. Eine weitere Aufgabe der Erfindung ist es, ein vereinfachtes Verfahren zur Herstellung von Brandschutzprofilen anzugeben.

Diese Aufgabe wird zum einen gelöst durch eine Baugruppe umfassend mindestens zwei Brandschutzprofile, die einen Schlauch aus einem Verbundmaterial aufweisen, der mit einem Brandschutzmaterial gefüllt ist, wobei das Verbundmaterial ein anorganisches Fasermaterial aufweist, das mit einer Folie verbunden ist, wobei die Brandschutzprofile derart ausgebildet sind, dass sie im Brandfall miteinander verbacken. Verbacken bedeutet in diesem Zusammenhang, dass das Brandschutzmaterial eines ersten Brandschutzprofiles durch das Verbundmaterial eines unmittelbar benachbarten zweiten Brandschutzprofils hindurch in Richtung des Inneren des zweiten Brandschutzprofils expandiert und das Verbundmaterial teilweise durchdringt und umgekehrt, das Brandschutzmaterial des zweiten Brandschutzprofils in Richtung des Inneren des ersten Brandschutzprofils expandiert, wodurch eine Verbindung zwischen den beiden Brandschutzprofilen ermöglicht wird.

Der Schlauch aus Verbundmaterial bildet dabei eine thermisch beständige Hülle, was den positiven Effekt hat, dass eine stabile Aschekruste entsteht, insbesondere durch eine Verpressung des Brandschutzmaterials. Durch die stabile Aschekruste und das Verbundmaterial sind auch die Eigenschaften während des Wasserstrahltests (Hose Stream Test) verbessert.

Aufgrund dieser positiven Effekte können besonders gute Brandeigenschaften bei reduzierter Dichte erreicht werden. Zudem sind weniger Intumeszenzadditive notwendig als üblich.

Beispielsweise kann die Dichte des Brandschutzmaterials im ausgehärteten Zustand zwischen 100 kg/m³ und 200 kg/m³ liegen, insbesondere bei 150 kg/m³. Dies hat den besonderen Vorteil, dass die Brandschutzprofile zumindest ein Stück weit komprimierbar sind. Dadurch kann auf ein aufwendiges Zuschneiden beim Abdichten von Durchbrüchen verzichtet werden. Beispielsweise kann ein gerader Schnitt genügen, um das Brandschutzprofil an eine Leitungsdurchführung anzupassen. Außerdem ist bei einer geringeren Dichte der Materialeinsatz reduziert.

Durch die Folie im Verbundmaterial ist ein individuelles Design möglich, zum Beispiel durch eine Bedruckung der Folie. Je nach Auswahl der Folie kann die Folie auch überstreichbar sein. Für Lebensmittelbereiche kann eine Folie gewählt werden, die eine leicht zu reinigende Oberfläche hat beziehungsweise eine desinfizierbare Folie. Zudem kann die Folie zu einer Verbesserung der Dichteigenschaften beitragen, zum Beispiel zu einer besseren Abdichtung gegen Rauch, Luft, Schall und Gerüchen. Des Weiteren kann die Folie als Trägermaterial für das anorganische Fasermaterial dienen.

Die Folie kann ein Kunststoffmaterial aufweisen bzw. umfassen, wie etwa eine Verbundfolie, einschließlich Verbundfolien mit einer Metallschicht, wie beispielsweise Aluminiumverbundfolien, oder aus einem Kunststoffmaterial bestehen.

Das Brandschutzmaterial ist beispielsweise ein intumeszierendes Material. Dies sorgt für einen besonders zuverlässigen Brandschutz.

Gemäß einer Ausführungsform kann das Brandschutzmaterial Polyurethan umfassen. Zusätzlich können im Brandschutzmaterial Brandschutzadditive enthalten sein.

Das anorganische Fasermaterial kann ein Gewebe, ein Gestricke oder ein Vliesstoff sein. Hierbei ist es von Vorteil, dass diese Fasermaterialien zumindest ein Stück weit durchlässig sind. Somit kann im Brandfall das Brandschutzmaterial durch das Fasermaterial hindurch intumeszieren. Dadurch können die Brandschutzprofile, die jeweils miteinander in Kontakt stehen, miteinander verbacken. Des Weiteren sind derartige Fasermaterialien flexibel und bei der Herstellung eines Brandschutzprofils einfach zu handhaben.

Besonders gut eignen sich für das Fasermaterial Glasfasern, Basaltfasern, Keramikfasern, Metallfasern bzw. -fäden oder -drähte, oder ein Fasermaterial aus unterschiedlichen Materialien, wie anorganische Verbundmaterialien, etwa Glasfasern mit Metalldraht.

Vorzugsweise weist das Fasermaterial eine Vielzahl von Löchern auf. Durch die Löcher kann das Brandschutzmaterial hindurch intumeszieren, sodass ein Verbacken der einzelnen Brandschutzprofile gefördert wird. Dabei hat sich eine Lochgröße von etwa 3 mm x 3 mm als besonders vorteilhaft herausgestellt. Bei dieser Größe kann ausreichend Brandschutzmaterial durch die Löcher intumeszieren, gleichzeitig ist eine ausreichende Formstabilität des Brandschutzprofils gegeben. Die Lochgröße kann jedoch auch abweichen, beispielsweise kann sie zwischen 1 mm x 1 mm und 5 mm x 5 mm liegen.

Alternativ oder zusätzlich kann das Fasermaterial brennbare Fasern und nichtbrennbare Fasern aufweisen. Dadurch wird der Vorteil erreicht, dass das Fasermaterial bei der Herstellung ausreichend dicht ist, um das Brandschutzmaterial innerhalb des Schlauchs zu halten. Im Brandfall, wenn die brennbaren Fasern verbrannt sind, ist jedoch ein Intumeszieren des Brandschutzmaterials durch das Fasermaterial hindurch vereinfacht, wodurch ein Verbacken von in Kontakt stehenden Brandschutzprofilen begünstigt ist.

Ein Brandschutzprofil weist vorzugsweise einen rechteckigen Querschnitt auf. Dadurch lassen sich die Brandschuttprofile besonders einfach und lückenlos in einem Wand- oder Deckendurchbruch stapeln.

Die Aufgabe wird des weiteren erfindungsgemäß gelöst durch ein Verfahren zur Herstellung eines Brandschutzprofils, wobei das Verfahren folgende Schritte umfasst:
- Herstellen eines Endlosschlauchs aus einem Verbundmaterial,
- Befüllen des Endlosschlauchs mit flüssigem Brandschutzmaterial,
- Aufschäumen des Brandschutzmaterials,
- Vereinzeln des Endlosschlauchs zu Brandschutzprofilstücken.

Ein solches Herstellverfahren ist besonders effizient, insbesondere ist eine vollautomatische Fertigung mit wenig manuellen Aufwand möglich, was zu einem geringeren Produktionskostenanteil führt.

Die Brandschutzprofilstücke können auf eine Länge von beispielsweise 80 cm zugeschnitten werden, um ein einfaches Handling beim Verpacken und beim Transport zu ermöglichen. Vor der Installation können die Profilstücke von einem Benutzer bei Bedarf zu kürzeren Stücken zugeschnitten werden.

Gemäß einer Ausführungsform kann der Endlosschlauch an einer Nahtstelle geklebt oder verschweißt werden. Dadurch wird vermieden, dass der Endlosschlauch beim Aufschäumen des Brandschutzmaterials aufgedrückt wird. Es ist aber auch denkbar, dass auf eine Fixierung verzichtet und der Schlauch beim Aufschäumen durch das Brandschutzmaterial verklebt wird.

Um dem Brandschutzprofil seine Form zu geben, kann der Endlosschlauch beim Aufschäumen des Brandschutzmaterials mittels allseitig anliegender Stützelemente gehalten werden.

Weitere Vorteile und Merkmale der Erfindung ergeben sich aus der nachfolgenden Beschreibung und aus den Zeichnungen, auf die Bezug genommen wird. In den Zeichnungen zeigen:
- Figur 1 schematisch eine erfindungsgemäße Baugruppe mit mehreren Brandschutzprofilen, die in einem Wanddurchbruch angeordnet ist,
- Figur 2 schematisch ein Brandschutzprofil,
- Figur 3 schematisch ein anorganisches Fasergewebe und
- die Figuren 4 und 5 Schritte bei der Herstellung eines Brandschutzprofils.

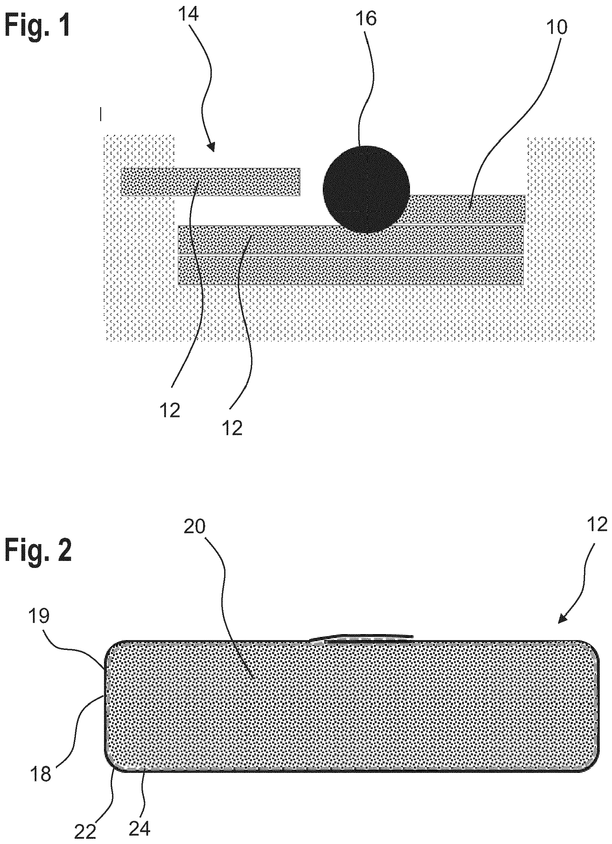

Figur 1 zeigt schematisch eine erfindungsgemäße Baugruppe 10 mit mehreren Brandschutzprofilen 12, die in einem Wanddurchbruch 14 angeordnet ist, um diesen abzudichten. In dem Wanddurchbruch 14 ist eine Leitungsdurchführung 16 angeordnet. Die Leitungsdurchführung 16 kann ein Rohr oder ein Kabel sein.

Die Brandschutzprofile 12 weisen einen Schlauch 18 aus einem Verbundmaterial 19 auf, der mit einem Brandschutzmaterial 20 gefüllt ist. Eine detaillierte Schnittdarstellung eines Brandschutzprofils 12 ist schematisch in Figur 2 gezeigt.

Das Brandschutzmaterial 20 ist vorzugsweise ein intumeszierendes Material.

Das Verbundmaterial 19 setzt sich zusammen aus einer Folie 22 und einem anorganischen Fasermaterial 24. In Figur 2 ist die Folie 22 durch eine durchgehende Linie und das Fasermaterial 24 durch eine gestrichelte Linie dargestellt.

Die Folie 22 bildet eine Außenfläche des Brandschutzprofils 12. Dies hat den Vorteil, dass dem Brandschutzprofil 12 durch Bedrucken der Folie 22 ein individuelles Design verliehen werden kann. Je nach Auswahl der Folie 22 kann das Brandschutzprofil 12 auch überstreichbar oder leicht zu reinigen sein.

Das Fasermaterial 24 kann ein Gewebe, ein Gestricke oder ein Vliesstoff sein, insbesondere aus Glasfasern, Basaltfasern oder Keramikfasern, Metallfasern bzw. - fäden oder -drähte, oder einem Fasermaterial aus unterschiedlichen Materialien, wie anorganische Verbundmaterialien, etwa Glasfasern mit Metalldraht.

Wenn eine bestimmte Temperatur überschritten wird, beispielsweise im Brandfall, dehnt sich das Brandschutzmaterial 20 aus und kann durch das Verbundmaterial 19 hindurch aus dem Schlauch 18 austreten.

Bei einer Baugruppe 10 mit mehreren Brandschutzprofilen 12, wie in Figur 1 gezeigt, können die aneinander angrenzenden Brandschutzprofile 12 miteinander verbacken. Dadurch wird ein besonders zuverlässiger Brandschutz erreicht.

Das Brandschutzmaterial 20 weist vorzugsweise eine geringe Dichte auf, beispielsweise zwischen 100 kg/m³ und 200 kg/m³. Der Feststoffgehalt des ausgehärteten Brandschutzmaterials liegt vorzugsweise zwischen 20 g und 30 g, insbesondere bei 27 g, jeweils bezogen auf einen Liter an ausgehärtetem Brandschutzmaterial. Dadurch ist das Brandschutzprofil 12 komprimierbar und kann sich besonders gut an die Leitungsdurchführung 16 anpassen.

Ein Brandschutzprofil 12 hat beispielsweise eine Höhe von 35 mm, eine Breite von 150 mm und eine Länge von 800 mm. Die Breite erstreckt sich in montiertem Zustand in eine Tiefenrichtung des abzudichtenden Durchbruchs 14. Somit hängt die optimale Breite von einer gewünschten Brandwiderstandsdauer ab. Mit einer Breite von 150 mm kann jedoch in der Regel eine ausreichende Brandwiderstandsdauer gewährleistet werden.

Im Vergleich zu Brandschutzsteinen hat das Brandschutzprofil 12 aufgrund seiner Länge den Vorteil, dass nur wenige Profile notwendig sind, um einen Durchbruch 14 abzudichten. Insbesondere kann sich ein Brandschutzprofil 12 über eine gesamte Breite eines Durchbruchs 14 erstrecken, wie in Figur 1 gezeigt. Lediglich im Bereich der Leitungsdurchführung 16 kann es notwendig sein, kürzere Profilstücke 12 einzusetzen. Diese können einfach durch Zurechtschneiden der Brandschutzprofile 12 erzeugt werden. Die Installationszeit kann dadurch insgesamt besonders kurz sein.

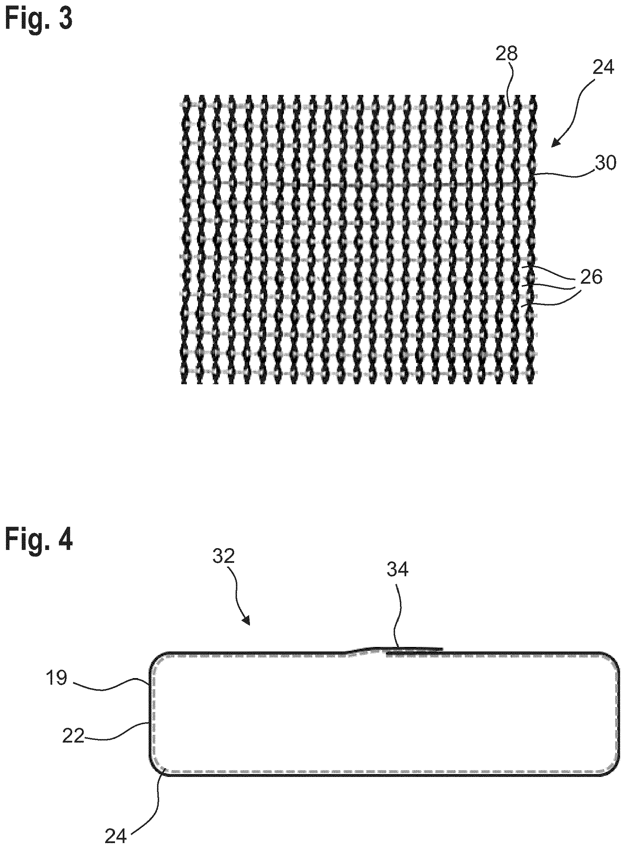

Figur 3 zeigt schematisch eine Lage des anorganischen Fasermaterials 24, das im Verbundmaterial 19 vorhanden ist. Das Fasermaterial 24 weist eine Vielzahl von Löchern 26 auf, durch die das Brandschutzmaterial 20 im Brandfall hindurch intumeszieren kann. Dadurch können aneinander angrenzende Brandschutzprofile 12 miteinander verbacken, wodurch ein besonders guter Brandschutz erreicht wird. Das Fasermaterial 24 ist locker gewebt, das heißt die einzelnen Fasern sind nicht aneinander fixiert. Dadurch ist das Gewebe besonders flexibel.

In einer Ausführungsform weist das Fasermaterial 24 brennbare Fasern 28 und nichtbrennbare Fasern 30 auf. In der Darstellung in Figur 3 verlaufen die brennbaren Fasern 28 horizontal und die nicht-brennbaren Fasern 30 vertikal. Diese Ausführungsform hat den Vorteil, dass die brennbaren Fasern 28 im Brandfall verbrennen und das Brandschutzmaterial 20 besonders gut durch das Verbundmaterial 19 hindurch intumeszieren kann.

Das Fasermaterial 24 begünstigt außerdem die Bildung einer stabilen Aschekruste.

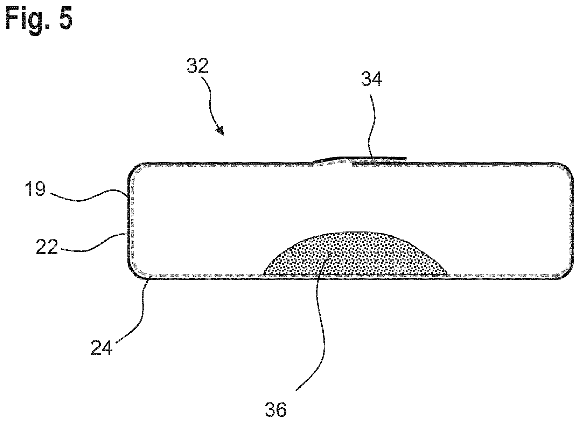

Die Figuren 4 und 5 veranschaulichen schematisch ein Verfahren zur Herstellung eines Brandschutzprofils 12, wie es in Figur 2 gezeigt ist.

Zunächst wird ein Verbundmaterial 19 beispielsweise in Form von Bahnen bereitgestellt, das durch Umfalten zu einem Endlosschlauch 32 geformt wird. Figur 4 zeigte schematisch einen Querschnitt durch einen solchen Endlosschlauch 32.

Dabei entsteht eine Materialüberlappung, insbesondere eine Nahtstelle 34, entlang der Endlosschlauch 32 verklebt oder verschweißt werden kann.

Anschließend wird ein flüssiges Brandschutzmaterial 36 in den Endlosschlauch 32 gefüllt und aufgeschäumt. Der Feststoffgehalt des flüssiges Brandschutzmaterials 36 beträgt beispielsweise 18 Gew.-%.

Während dem Aufschäumen wird der Endlosschlauch 32 stabilisiert, um eine gewünschte Form des Brandschutzprofils 12 zu erhalten, zum Beispiel ein Profil mit einem im Wesentlichen rechteckigen Querschnitt. Die Stabilisierung erfolgt beispielsweise mittels allseitig anliegender Förderbänder.

Nach dem Aushärten des Brandschutzmaterials 20 kann das entstandene Endlosprofil zu einzelnen Brandschutzprofilen 12 in einer gewünschten Länge vereinzelt werden.

## Patentansprüche

1. Baugruppe (10) umfassend mindestens zwei Brandschutzprofile (12), die einen Schlauch (18) aus einem Verbundmaterial (19) aufweisen, der mit einem Brandschutzmaterial (20) gefüllt ist, wobei das Verbundmaterial (19) ein anorganisches Fasermaterial (24) aufweist, das mit einer Folie (22) verbunden ist, wobei die Brandschutzprofile (12) derart ausgebildet sind, dass sie im Brandfall miteinander verbacken.

2. Baugruppe (10) nach Anspruch 1, **dadurch gekennzeichnet, dass** das Brandschutzmaterial (20) ein intumeszierendes Material ist.

3. Baugruppe (10) nach Anspruch 1 oder 2, **dadurch gekennzeichnet, dass** das anorganische Fasermaterial (24) ein Gewebe, ein Gestricke oder ein Vliesstoff ist.

4. Baugruppe (10) nach einem der vorhergehenden Ansprüche, **dadurch gekennzeichnet, dass** das Fasermaterial (24) Glasfasern, Basaltfasern oder Keramikfasern, Metallfasern, -fäden oder -drähte, ein Fasermaterial aus unterschiedlichen Materialien, wie anorganische Verbundmaterialien, aufweist.

5. Baugruppe (10) nach einem der vorhergehenden Ansprüche, **dadurch gekennzeichnet, dass** das Fasermaterial (24) eine Vielzahl von Löchern (26) aufweist.

6. Baugruppe (10) nach einem der vorhergehenden Ansprüche, **dadurch gekennzeichnet, dass** das Fasermaterial (24) brennbare Fasern (28) und nichtbrennbare Fasern (30) aufweist.

7. Baugruppe (10) nach einem der vorhergehenden Ansprüche, **dadurch gekennzeichnet, dass** das Brandschutzprofil (12) einen rechteckigen Querschnitt aufweist.

8. Baugruppe (10) nach einem der vorhergehenden Ansprüche, **dadurch gekennzeichnet, dass** das Brandschutzmaterial (20) komprimierbar ist.

9. Verfahren zur Herstellung eines Brandschutzprofils (12), umfassend folgende Schritte:
- Herstellen eines Endlosschlauchs (32) aus einem Verbundmaterial (19),
- Befüllen des Endlosschlauchs (32) mit flüssigem Brandschutzmaterial (36),
- Aufschäumen des Brandschutzmaterials (36),
- Vereinzeln des Endlosschlauchs (32) zu Brandschutzprofilstücken (12).

10. Verfahren nach Anspruch 9, **dadurch gekennzeichnet, dass** der Endlosschlauch (32) an einer Nahtstelle (34) geklebt oder verschweißt wird.

11. Verfahren nach Anspruch 9 oder 10, **dadurch gekennzeichnet, dass** der Endlosschlauch (32) beim Aufschäumen des Brandschutzmaterials (36) mittels allseitig anliegender Stützelemente gehalten wird.
